**Europäisches Patentamt**

**European Patent Office**

**Office européen des brevets**

(19)

(11) Veröffentlichungsnummer : **0 061 517**
**B1**

(12) # EUROPÄISCHE PATENTSCHRIFT

(45) Veröffentlichungstag der Patentschrift :
13.06.84

(51) Int. Cl.³ : **C 04 B 11/10**

(21) Anmeldenummer : **81108307.0**

(22) Anmeldetag : **14.10.81**

(54) Verfahren zur Herstellung eines wasserfesten Bindemittels.

(30) Priorität : 31.03.81 DE 3112703

(43) Veröffentlichungstag der Anmeldung :
06.10.82 Patentblatt 82/40

(45) Bekanntmachung des Hinweises auf die Patenterteilung : 13.06.84 Patentblatt 84/24

(84) Benannte Vertragsstaaten :
**AT BE DE FR GB IT NL**

(56) Entgegenhaltungen :
DE-A- 2 912 148
FR-A- 2 211 001
Chemical Abstracts Band 89, Nr. 4 24. Juli 1978
Columbus, Ohio, USA Y. MINESHITA et al. "High
strength building materials with improved waterproofness" Seite 338, Abstract Nr. 29796n

(73) Patentinhaber : **BABCOCK-BSH AKTIENGESELL-
SCHAFT vormals Büttner-Schilde-Haas AG
Parkstrasse 29 Postfach 4 und 6
D-4150 Krefeld 11 (DE)**

(72) Erfinder : **Neumann-Venevere, Peter, Prof. Dr.-Ing.
Sohlweg 6
D-3014 Laatzen 5 (DE)**
Erfinder : **Hose, Horst, Dr. Dipl.-Chem.
Umbachsweg 43
D-3500 Kassel (DE)**

(74) Vertreter : **Planker, Karl-Josef, Dipl.-Phys.
c/o BABCOCK-BSH AKTIENGESELLSCHAFT Parkstrasse 29 Postfach 4 + 6
D-4150 Krefeld 11 (DE)**

**Beschreibung**

Die Erfindung betrifft ein Verfahren zur Herstellung eines wasserfesten Bindemittels, bei dem ein Gemenge aus kalziumsulfathaltigem Material und kalk-, ton- und silikathaltigen Stoffen thermisch umgewandelt wird.

Bei einem bekannten Verfahren zur Herstellung von Baustoffen auf Gipsbasis für wasserfeste Produkte, vergl. DE-OS 29 12 148, wird in einer ersten Brennstufe ein Gemenge aus tonig-silikatisch ungesättigten Kalkverbindungen mit einer unterhalb der Sintergrenze liegenden Temperatur, z. B. 870 °C, gebrannt. In einer zweiten Behandlungsstufe werden die zu verarbeitenden Gipse mit dem in der ersten Brennstufe vorbehandelten Gemenge vermischt und in einem niedrigen Temperaturbereich, z. B. 120 bis 180 °C, weiterbehandelt.

Es hat sich nun als besonders vorteilhaft erwiesen, wenn man bei einem Verfahren der eingangs genannten Art erfindungsgemäß das Gemenge, welches mindestens 60 % Calciumsulfat enthält, fein mahlt und homogenisiert und alsdann einer Hitzeeinwirkung unterwirft, deren Temperatur und Dauer so eingestellt ist, daß die Kristalle des Kalziumsulfats in eine Gefügestruktur übergeführt werden, welche mindestens überwiegend einen körnigen Charakter aufweist und daß die übrigen Anteile des Gemenges ein hydratationsfähiges Produkt bilden.

Dabei liegen vorteilhafterweise die Hydratationsprodukte in einer solchen Menge vor, daß durch die Hydratationsprodukte der Porenraum der körnigen Gefügestruktur des Kalziumsulfats ausgefüllt wird. Die Festigkeitsentwicklung in dem thermisch umgesetzen Gemenge wird infolge hydraulischer Produktumsetzung eingeleitet.

Hierbei hat man es in der Weiterführung des Erfindungsgedankens in der Hand, die Art und mengenmäßige Zusammensetzung der kalk-, ton- und silikathaltigen Stoffe so festzulegen, daß der Festigkeitsaufbau des Bindemittels eingeleitet und intensiviert sowie das Erstarrungs- und Abbindeverhalten reguliert wird.

Bei der Durchführung des erfindungsgemäßen Verfahrens ist es vorteilhaft, das Gemengemehl vor der Hitzeeinwirkung zu einem körnigen Rohgut zu verdichten und/oder zu granulieren.

Die optimale Temperatur der Hitzeeinwirkung liegt in der Regel über 800 °C, vorzugsweise um 900 °C.

Das erfindungsgemäße Verfahren sei nun anhand von Ausführungsbeispielen näher erläutert :

A) Es wurden 65 % Rohgipsstein (etwa in der Zusammensetzung nach Tabelle I) und 35 % silikatisch angereichertes Kalksteinmehl (etwa in der Zusammensetzung nach Tabelle II) zusammen auf eine Mahlfeinheit von kleiner als 90 µm vermahlen, homogenisiert und zu einem körnigen Rohgut verdichtet und alsdann im Drehrohrofen einer Hitzeeinwirkung von 920 °C etwa eine Stunde lang unterworfen.

Dies so behandelte Gut wird abgekühlt, auf eine Mahlfeinheit von kleiner als 90 µm zu einem fertigen Bindemittel vermahlen.

Zur Überprüfung seiner Verwendbarkeit wurde das so erhaltene Bindemittel mit Wasser zu einem Wasser/Bindemittelverhältnis w = 0,43 versetzt und zu Prismen 4 × 4 × 16 cm geformt.

Die Prismen wurden sieben Tage in einem Feuchtkasten feucht, anschließend zweiundzwanzig Tage im Wasser und weiterhin fünf Tage an der Luft, trocken gelagert. Nach einer solchen Behandlung über eine Wechsellagerung von 34 Tagen ergaben sich Druckfestigkeiten von 24,9 bis 29,6 N/mm².

B) Es wurden wiederum 65 % Rohgipsstein nach Tabelle I und 35 % stark silikatisch angereicherter Kalksteinmergel (etwa in der Zusammensetzung nach der Tabelle III) zu einem Gemenge aufgebaut, vermahlen, homogenisiert, zu einem körnigen Rohgut verdichtet und bei 920 °C eine Stunde lang gebrannt.

Nach dem Abkühlen des gebrannten Gutes wird es auf eine Mahlfeinheit kleiner als 90 µm zu dem Bindemittel vermahlen.

Zur Überprüfung der Verwertbarkeit wurde das erbrannte Bindemittel mit Wasser, in einem Wasser/Bindemittelverhältnis w = 0,43 versetzt, zu Prismen geformt und hierauf sieben Tage lang im Feuchtkasten feucht, ferner fünf Monate im fließenden Wasser gelagert.

Die so behandelten Prismen wurden nach der Entnahme aus dem Wasserbad sofort in einer Druckpresse abgedrückt. Es ergaben sich Druckfestigkeiten von 17,9 bis 24,0 N/mm².

Tabelle I — Gipsrohstein

| | |
|---|---|
| Freie Feuchte | 0,4 % |
| Kristallwasser | 19,8 % |
| CaO | 32,8 % |
| MgO | 0,3 % |
| $SO_3$ | 45,0 % |
| $CO_2$ | 1,1 % |
| $R_2O_3$ | 0,2 % |
| HCl-unlösliches | 0,7 % |

2

Tabelle II — Kalksteinmergel mit Kieselsäure leicht angereichert

| | |
|---|---|
| Glühverlust | 29,93 % |
| SiO$_2$ | 27,84 % |
| Al$_2$O$_3$ | 3,44 % |
| Fe$_2$O$_3$ | 1,73 % |
| Mn$_2$O$_3$ | 0,26 % |
| CaO | 34,23 % |
| MgO | 0,73 % |
| K$_2$O | 0,58 % |
| Na$_2$O | 0,26 % |
| SO$_3$ | 0,84 % |

Tabelle III — Kalksteinmergel mit Kieselsäure intensiv angereichert

| | |
|---|---|
| Glühverlust | 19,05 % |
| SiO$_2$ | 53,15 % |
| Al$_2$O$_3$ | 2,27 % |
| Fe$_2$O$_3$ | 1,15 % |
| Mn$_2$O$_3$ | 0,17 % |
| CaO | 22,77 % |
| MgO | 0,49 % |
| K$_2$O | 0,39 % |
| Na$_2$O | 0,09 % |
| SO$_3$ | 0,45 % |

Selbstverständlich lassen sich im Rahmen der Erfindung auch andere gleichartige Stoffe und Stoffzusammensetzungen verwenden. So ist außer dem angegebenen Gips-Rohstein auch Anhydrit-Rohstein sowie auch ein Gips verwendbar, wie er als Abfallprodukt bei industriellen Prozessen anfällt. Auch kann die Temperatur und Dauer der Hitzeeinwirkung bei anderen Stoffzusammensetzungen variieren, wichtig ist lediglich, daß hiermit die im Hauptanspruch angegebenen Umwandlungen erfolgen.

Sämtliche in den Tabellen und der übrigen Patentschrift in Prozent angegebenen Daten sind als Massenanteile zu verstehen.

**Ansprüche**

1. Verfahren zur Herstellung eines wasserfesten Bindemittels durch thermische Umwandlung eines Gemenges aus kalziumsulfathaltigem Material und kalk-, ton- und silikathaltigen Stoffen, dadurch gekennzeichnet, daß das Gemenge mindestens 60 % Kalziumsulfat enthält, feingemahlen und homogenisiert einer Hitzeeinwirkung unterworfen wird, deren Temperatur und Dauer so eingestellt ist, daß die Kristalle des Kalziumsulfats in eine Gefügestruktur übergeführt werden, welche mindestens überwiegend einen körnigen Charakter aufweist, und daß die übrigen Anteile des Gemenges ein hydratationsfähiges Produkt bilden.

2. Verfahren nach Anspruch 1, dadurch gekennzeichnet, daß durch die Hydratationsprodukte der Porenraum der körnigen Gefügestruktur des Kalziumsulfats ausgefüllt und die Festigkeitsentwicklung in dem thermisch umgesetzten Gemenge infolge hydraulischer Produktumsetzung eingeleitet wird.

3. Verfahren nach Anspruch 1 und 2, dadurch gekennzeichnet, daß das Erstarrungs- und Abbindeverhalten des thermisch umgesetzten, zu einem feinen Bindemittel vermahlenen Gemenges, über Art und mengenmäßige Zusammensetzung der kalk-, ton- und silikathaltigen Stoffe reguliert wird.

4. Verfahren nach Anspruch 1 bis 3, dadurch gekennzeichnet, daß das Gemenge vor der Hitzeeinwirkung zu einem körnigen Rohgut verdichtet wird.

5. Verfahren nach Anspruch 1 bis 4, dadurch gekennzeichnet, daß das Gemenge vor der anschließenden Hitzeeinwirkung granuliert wird.

6. Verfahren nach mindestens einem der Ansprüche 1 bis 5, dadurch gekennzeichnet, daß das Gemenge einer Hitzeeinwirkung von über 800 °C, vorzugsweise um 900 °C, unterworfen wird.

**Claims**

1. Process for producing a waterproof binder by thermal transformtion of a mixture composed of calcium sulfate-containing material and substances containing lime, clay and silicate, characterized by the fact that the mixture has a calcium sulfate content of at least 60 % and, after fine grinding and homogenizing, is subjected to heat of a temperature and for a period such as to transform the calcium sulfate crystals into a texture of at least predominantly grainy character, and by the fact that the other portions of the mixture form a product capable of hydration.

2. Process according to Claim 1, characterized by the fact that the pore space of the grainy calcium sulfate structure is filled by the hydration products and that solidification of the thermally transformed mixture is initiated by hydraulic product transformation.

3. Process according to Claims 1 and 2, characterized by the fact that the solidification and binding behaviour of the thermally transformed mixture, which is ground to a fine binder, is controlled by the type and quantified composition of the substances containing lime, clay and silicate.

4. Process according to Claims 1 to 3, characterized by the fact that the mixture is compacted to a grainy raw product prior to heat application.

5. Process according to Claims 1 to 4, characterized by the fact that the mixture is granulated prior to heat application.

6. Process according to at least one of Claims 1 to 5, characterized by the fact that the mixture is subjected to heat in excess of 800 °C, preferably around 900 °C.

## Revendications

1. Procédé de fabrication d'un liant résistant à l'eau par la transformation thermique d'un mélange constitué d'un matériau contenant du sulfate de calcium et de substances contenant de la chaux, de l'argile et des silicates caractérisé par le fait que le mélange contenant au moins 60 % de sulfate de calcium, après avoir été finement broyé et homogénéisé, est exposé à un effet de chaleur dont la température et la durée sont réglées de façon à transformer les cristaux du sulfate de calcium en une structure présentant au moins principalement un caractère granuleux et que les autres composants du mélange forment un produit hydratable.

2. Procédé selon la revendication 1, caractérisé par le fait que les pores de la structure granuleuse du sulfate de calcium sont remplis par les produits d'hydratation et que le durcissement du mélange transformé thermiquement est amorcé suite à la transformation hydraulique.

3. Procédé selon les revendications 1 et 2, caractérisé par le fait que le comportement à la prise et au durcissement du mélange, transformé thermiquement et broyé finement en liant, est réglé par la nature et la composition quantitative des substances contenant de la chaux, de l'argile et des silicates.

4. Procédé selon les revendications 1 à 3, caractérisé par le fait que le mélange, avant d'être exposé à l'effet de chaleur, est comprimé en une matière brute granuleuse.

5. Procédé selon les revendications 1 à 4, caractérisé par le fait que le mélange est granulé avant d'être exposé à l'effet de chaleur.

6. Procédé selon au moins une des revendications 1 à 5, caractérisé par le fait que le mélange est exposé à une chaleur supérieure à 800 °C, se situant de préférence autour de 900 °C.